(19)

**Europäisches Patentamt**
**European Patent Office**
**Office européen des brevets**

(11)  **EP 3 474 567 B1**

(12)  **EUROPEAN PATENT SPECIFICATION**

(45) Date of publication and mention
of the grant of the patent:
**06.05.2020 Bulletin 2020/19**

(51) Int Cl.:
**H04Q 11/00** *(2006.01)*    **H04J 3/06** *(2006.01)*

(21) Application number: **17197392.8**

(22) Date of filing: **19.10.2017**

(54)  **METHODS AND PRODUCTS FOR ONU START-UP PROCEDURE**

VERFAHREN UND PRODUKTE FÜR ONU-INBETRIEBNAHMEVERFAHREN

PROCÉDÉS ET PRODUITS POUR PROCÉDURE DE DÉMARRAGE D'ONU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.04.2019 Bulletin 2019/17**

(73) Proprietor: **Nokia Solutions and Networks Oy
02610 Espoo (FI)**

(72) Inventors:
• **BORKOWSKI, Robert**
**70435 Stuttgart (DE)**
• **BONK, Rene**
**70435 Stuttgart (DE)**
• **PÖHLMANN, Wolfgang**
**70435 Stuttgart (DE)**

(74) Representative: **Louis Pöhlau Lohrentz
Patentanwälte
Postfach 30 55
90014 Nürnberg (DE)**

(56) References cited:
**WO-A1-2017/000992    US-A1- 2016 294 620**

• **LI JUN ET AL: "Adaptive registration in
TWDM-PON with ONU migrations", JOURNAL OF
OPTICAL COMMUNICATIONS AND
NETWORKING, INSTITUTE OF ELECTRICAL AND
ELECTRONICS ENGINEERS, US, vol. 6, no. 11, 1
November 2014 (2014-11-01), pages 943-951,
XP011564211, ISSN: 1943-0620, DOI:
10.1364/JOCN.6.000943 [retrieved on 2014-11-12]**

**Description**

Field of the invention

The invention relates to communication technology, in particular to an optical communication network.

Background

In a typical Passive Optical Network (PON) scenario a new Optical Network Unit (ONU) is registered in the network during a ranging process, which involves halting the upstream traffic in the entire PON (so-called quiet window) in order to measure the roundtrip delay (RTD) to a new ONU. This is followed by the optical line terminal (OLT) sending instructions to the new ONU to adjust its transmission delay (equalization delay) in order to synchronize in time the new ONU to already registered ONUs, and hence avoid collision at the OLT receiver between bursts originating from the new and previously registered ONUs when normal traffic is resumed. The quiet window needs to be periodically repeated in order to discover newly attached ONUs.

In ITU-T PONs (XG(S)-PON or NG-PON2), the ranging protocol requires quiet windows of 250 $\mu$s (multiple of the 125 $\mu$s frame duration, dependent on the maximum supported fiber distance). During this window, only unregistered ONUs are allowed to transmit their serial numbers to OLT, and in turn OLT assigns them ONU IDs. Subsequently, further quiet windows are used to measure the RTD to each new ONU, one at a time, and calculate their equalization delay, i.e., a time by which the transmission from this ONU has to be delayed in order to synchronize it with the other ONUs.

Existence of quiet windows requires that the upstream traffic must be buffered for the said period, and hence periodically introduces significant latency into the upstream data transmission. This is an adequate solution for scenarios involving dynamic bandwidth allocation (DBA) with unpredictable traffic, such as non-latency critical residential users. However, for constant throughput scenarios with fixed bandwidth allocation (with DBA turned off) buffering is unacceptable as the amount of the buffered data would grow infinitely with time. Moreover, certain applications such as mobile fronthauling, require very low latency connections (e.g., 5G target of 1 ms end-to-end latency for vehicular applications), for which long traffic interruptions can prevent reaching the latency goal. Document WO 2017/000992 A1 discloses a method for activating an ONU with a tunable, uncalibrated transmitter in a multi-wavelength PON which allows generating an LL-LF activation signal which causes a reduced interferometric crosstalk on the upstream optical signals of already active ONUs. This may allow to increase the power level of the LL-LF activation signal without inducing excessive penalties on the upstream signals of the active ONUs. Since the optical power of the LL-LF activation signal is much lower than the optical power of the pre-existing upstream traffic, the LL- LF activation signal substantially does not affect the pre-existing upstream traffic, independently of its wavelength. Hence, no quiet window at all is required, meaning that the LL-LF activation signals may be transmitted without requiring any suspension of the upstream traffic transmission from any ONU of the multi-wavelength PON.

An object of the invention is to develop a method for ONU ranging, where quiet windows do not have to be used.

Summary of the Invention

The object of the invention is achieved by the method and apparatus in the claims. According to one aspect of the invention, there is provided a method in an Optical Line Terminal, OLT, of assisting a first Optical Network Unit, ONU, starting up a communication with the OLT, the OLT being communicatively coupled to the first ONU that is not yet in operation and a first number of ONUs that are already in operation, wherein, the first number is a natural number; the method comprising: a) transmitting a predetermined data within a predetermined time interval in a downstream frame to the first ONU, b) transmitting a predetermined optical signal with a time delay of transmission ($t_{delay,Tx}$) to the first ONU, wherein, the predetermined optical signal and the downstream frame are transmitted at different optical frequencies, the time delay of transmission ($t_{delay,Tx}$) being a time between a predetermined bit of the downstream frame and a predetermined bit of the predetermined optical signal when they are transmitted by the OLT, and wherein, the predetermined optical signal introduces errors in the downstream frame in the predetermined time interval when the downstream frame is received by the first ONU (130); c) assigning to each of the first number of ONUs a time interval within an upstream frame to transmit an upstream burst signal to the OLT, while leaving at least one predetermined time slot in the upstream frame reserved for a burst signal from the first ONU; d) transmitting a first indication to the first ONU, the first indication indicating a starting time ($t_{eq}$) located within the at least one predetermined time slot in the upstream frame; e) receiving a burst signal from the first ONU in the at least one predetermined time slot.

In a preferred embodiment, the method further comprises transmitting a wavelength indication to the first ONU, the wavelength indication indicating a wavelength of a downstream signal and/or a wavelength of the predetermined optical signal.

In a preferred embodiment, the method further comprises determining the time delay of transmission ($t_{delay,Tx}$) and a duration of the predetermined data according to a temporal position of the predetermined time interval in the downstream frame, a wavelength of a downstream signal, a wavelength of the predetermined optical signal and a maximum possible fiber distance between the first ONU and the OLT.

In a preferred embodiment, the method further comprises transmitting a predetermined data indication to the first ONU, the predetermined data indication indicating the predetermined data and its temporal position in the downstream frame.

In a preferred embodiment, the method further comprises transmitting an indication indicating the time delay of transmission ($t_{delay,Tx}$) to the first ONU.

In a preferred embodiment, a wavelength of a downstream signal is different from that of an upstream burst.

According to another aspect of the present invention, there is provided a method in a first Optical Network Unit, ONU, of starting up a communication with an Optical Line Terminal, OLT, the OLT being communicatively coupled to the first ONU, and a first number of ONUs that are already in operation, the first number being a natural number, each of the first number of ONUs being assigned to a time interval within an upstream frame to transmit an upstream burst signal to the OLT, at least one predetermined time slot in the upstream frame being reserved for a burst signal from the first ONU; the method comprising: a) receiving a downstream frame from the OLT, the received downstream frame comprising errors in a predetermined time interval introduced by a predetermined optical signal, wherein, the predetermined optical signal and the downstream frame are transmitted at different optical frequencies, b) determining a time delay of reception ($t_{delay,Rx}$) between a predetermined bit of the downstream frame and a predetermined bit of the predetermined optical signal when they are received at the ONU; c) determining a distance between the first ONU and the OLT based on a wavelength of a downstream signal; a wavelength of the predetermined optical signal and a time difference ($\Delta t$) between the time delay of reception ($t_{delay,Rx}$) and a time delay of transmission ($t_{delay,Tx}$), wherein, the time delay of transmission ($t_{delay,Tx}$) is a time between a predetermined bit of the downstream frame and a predetermined bit of the predetermined optical signal when they are transmitted by the OLT; d) receiving a first indication from the OLT, wherein, the first indication indicating a starting time ($t_{eq}$) located within the at least one predetermined time slot in an upstream frame; e) determining a time of transmission according to the starting time ($t_{eq}$) and a round-trip time ($t_{rtt}$) estimated based on an upstream wavelength and the distance between the first ONU and the OLT; f) transmitting a burst signal using the upstream wavelength to the OLT based on the time of transmission.

In a preferred embodiment, step b) further comprises locating error bits caused by the predetermined optical signal by comparing data within the predetermined time interval of the received downstream frame with a predetermined data; determining a temporal location of the predetermined bit of the predetermined optical signal by evaluating the error bits in the predetermined time interval in the received downstream frame.

In a preferred embodiment, the method further comprises receiving a wavelength indication from the OLT, the wavelength indication indicating a wavelength of the downstream signal and/or a wavelength of the predetermined optical signal.

In a preferred embodiment, the method further comprises receiving a predetermined data indication from the OLT, the predetermined data indication indicating the predetermined data and its temporal position in the downstream frame.

In a preferred embodiment, the method further comprises receiving a time delay indication indicating the time delay of transmission ($t_{delay,Tx}$) from the OLT.

In a preferred embodiment, the burst signal is a physical layer operation, administration and maintenance message, PLOAM, message.

In a preferred embodiment, the at least one predetermined time slot is long enough to accommodate the burst signal from the first ONU.

According to another aspect of the present invention, there is provided an Optical Line Terminal, OLT, communicatively coupled to the first ONU that is not yet in operation and a first number of ONUs that are already in operation, wherein, the first number is a natural number; the OLT comprising a first transmitter, a second transmitter and a receiver respectively connected to an optical signal multiplexer, and the OLT further comprising a control unit connected to the first transmitter, the second transmitter and the receiver; the first transmitter being configured to transmit a predetermined data within a predetermined time interval in a downstream frame to the first ONU; the second transmitter being configured to transmit a predetermined optical signal with a time delay of transmission ($t_{delay,Tx}$) to the first ONU, wherein, the predetermined optical signal and the downstream frame are transmitted at different optical frequencies, the time delay of transmission ($t_{delay,Tx}$) being a time between a predetermined bit of the downstream frame and a predetermined bit of the predetermined optical signal when they are transmitted by the OLT, and wherein, the predetermined optical signal introduces errors in the downstream frame in the predetermined time interval when the downstream frame is received by the first ONU; the control unit being configured to: assign to each of the first number of ONUs a time interval within an upstream frame to transmit an upstream burst signal to the OLT, while leaving at least one predetermined time slot in the upstream frame reserved for a burst signal from the first ONU; the first transmitter being further configured to transmit a first indication to the first ONU, wherein, the first indication indicating a starting time ($t_{eq}$) located within the at least one predetermined time slot in the upstream frame; the receiver being configured to receive a burst signal from the first ONU in the at least one predetermined time slot.

According to another aspect of the present invention, there is provided a first Optical Network Unit, ONU, being communicatively coupled to an Optical Line Terminal, OLT, the OLT being further communicatively coupled to a first number of ONUs that are already in operation, the first number being a natural number, each of the first number of ONUs being assigned to a time interval within an upstream frame to transmit an upstream signal to the OLT; at least one predetermined time slot in the upstream frame being reserved for a burst signal from the first ONU; the first ONU comprising a receiver, a transmitter connected to a diplexer, and the first ONU further comprising a determining unit connected to the receiver and the transmitter, the receiver being configured to: receive a downstream frame from the OLT, the received downstream frame comprising errors in a predetermined time interval introduced by a predetermined optical signal, wherein, the predetermined optical signal and the downstream frame are transmitted at different optical frequencies, the determining unit being configured to: determine a time delay of reception ($t_{delay,Rx}$) between a predetermined bit of the downstream frame and a predetermined bit of the predetermined optical signal when they are received at the ONU; determine a distance between the first ONU and the OLT based on a time difference ($\Delta t$) between the time delay of reception ($t_{delay,Rx}$) and a time delay of transmission ($t_{delay,Tx}$), a wavelength of a downstream signal and a wavelength of the predetermined optical signal, wherein, the time delay of transmission ($t_{delay,Tx}$) is a time between a predetermined bit of the downstream frame and a predetermined bit of the predetermined optical signal when they are transmitted by the OLT; the receiver being further configured to: receive a first indication from the OLT, wherein, the first indication indicating a starting time ($t_{eq}$) located within the at least one predetermined time slot in an upstream frame; the determining unit being further configured to: determine a time of transmission according to the starting time ($t_{eq}$) and a round-trip time ($t_{rtt}$) estimated based on an upstream wavelength ($\lambda_{us}$) and the distance between the first ONU and the OLT; the transmitter being configured to: transmit a burst signal using the upstream wavelength ($\lambda_{us}$) in an upstream frame to the OLT based on the time of transmission.

According to the present invention, the low-latency and high throughput fronthaul over PON for fixed-mobile converged network can be realized, where no quiet windows are required to establish new ONU connections. The start-up procedure according to the present invention requires only an existence of the downstream channel and no upstream channel during ranging. This is beneficial for latency sensitive applications (particularly mobile fronthaul), where ranging windows cannot be used because of constant throughput and low latency requirements.

Brief description of the figures

The features and advantages of the invention will be more completely understood by appreciating the following detailed description of preferred embodiments with reference to the figures, wherein

Fig. 1 depicts a schematic block diagram of a network topology according to an embodiment of the present invention;
Fig. 2 depicts a flow diagram of the method according to the embodiment of Fig. 1;
Fig. 3 depicts a schematic timing diagram according to an embodiment of the present invention.

Wherein, same or similar reference numerals refer to same or similar parts or components.

Detailed description

Exemplary embodiments of the present application are described herein in detail and shown by way of example in the drawings. It should be understood that, although specific exemplary embodiments are discussed herein there is no intent to limit the scope of the invention to such embodiments. To the contrary, it should be understood that the exemplary embodiments discussed herein are for illustrative purposes, and that modified and alternative embodiments may be implemented without departing from the scope of the invention as defined in the claims. Similarly, specific structural and functional details disclosed herein are merely representative for purposes of describing the exemplary embodiments. The invention described herein, however, may be embodied in many alternate forms and should not be construed as limited to only the embodiments set forth herein.

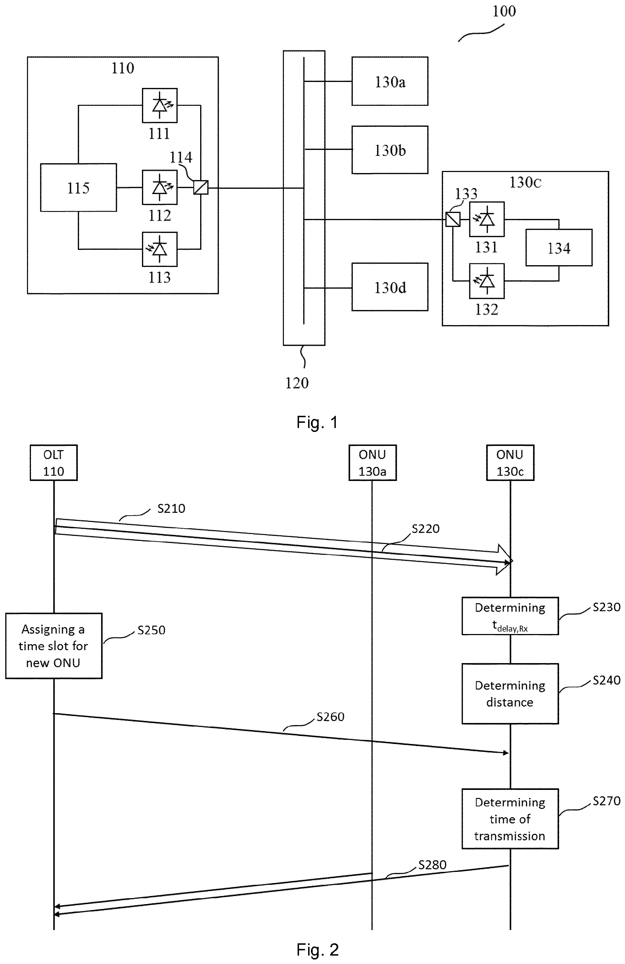

Fig. 1 shows a schematic block diagram of a network topology according to an embodiment of the present invention.

The optical network 100 comprises an OLT 110, a power splitter 120, and four ONUs 130a, 130b, 130c and 130d. The number of the ONUs here is merely an example. In another embodiment, the optical network 100 may comprise less or more ONUs.

As shown in Fig. 1, the OLT 110 is communicatively coupled to the ONUs 130a, 130b, 130c and 130d via the power splitter 120. The power splitter 120 distributes the downstream signal from the OLT 110 to all the ONUs, and converges the upstream signals from different ONUs to the OLT 110. In the present invention, term "downstream signal" represents signal carrying data transmitted from the OLT 110 to the ONUs. Preferably, a wavelength of a downstream signal is different from that of an upstream burst. A skilled person shall understand that there may be more optical components connected between the OLT 110 and the ONUs, for example more power splitters and/or optical amplifier(s). The power splitter 120 may be replaced by other component that enables the joint transmission of the optical signals over the same fiber.

In the embodiment shown in Fig. 1, the ONUs 130a, 130b and 130d are already in operation and the ONU 130c is not yet in operation. The OLT 110 assigns to each of the ONUs that are already in operation a time interval within an upstream frame. The ONUs that are already in operation use the time interval assigned to them to transmit an upstream burst signal to the OLT 110 respectively. In one embodiment, the time interval assigned to the operational ONUs can be dynamically changed, preferably according to the bandwidth requirement of the respective ONU.

Specifically, the OLT 110 comprises a first transmitter 111, a second transmitter 112 and a receiver 113 respectively connected to an optical signal multiplexer114 and then to the feeder fiber. The OLT 110 further comprises a control unit 115 connected to the first transmitter 111, the second transmitter 112 and the receiver 113.

The first transmitter 111 of the OLT 110 is configured to transmit downstream data signal at a first wavelength of $\lambda_{ds}$ to the ONUs communicatively coupled to the OLT 110. The second transmitter 112 of the OLT 110 is configured to transmit a predetermined optical signal at a second wavelength of $\lambda_{st}$ to the ONU that is not yet in operation. Alternatively, the predetermined optical signal is transmitted to all the ONUs communicatively coupled to the OLT 110. The first wavelength is different from the second wavelength, $\lambda_{ds} \neq \lambda_{st}$.

In one embodiment, the second wavelength $\lambda_{st}$ is offset with respect to the first wavelength $\lambda_{ds}$ by several nm, in one embodiment, $\lambda_{ds} - \lambda_{st} = 10nm$. The offset between the first wavelength $\lambda_{ds}$ and the second wavelength $\lambda_{st}$ shall be such that the predetermined optical signal can pass jointly with the downstream data signals, without significant attenuation, through various components used along the optical path of the system under consideration.

The receiver 113 is configured to receive upstream signals transmitted by the ONUs connected to the OLT 110.

The optical signal multiplexer 114 may be implemented as a WDM filter. The optical signal multiplexer 114 ensures that the upstream signals and the signals transmitted in downstream direction (including optical signals from the first transmitter 111 and the second transmitter 112) can be transmitted on the same fiber.

For simplicity, only the structure of the ONU 130c is shown in detail in Fig. 1. A skilled person shall understand that the other ONUs may also have the similar structure. In Fig. 1, the ONU 130c comprises a receiver 131, a transmitter 132 connected to a diplexer 133. The ONU 130c further comprises a determining unit 134 connected to the receiver 131 and the transmitter 132.

The receiver 131 of the ONU 130c is configured to receive downstream signals transmitted by the OLT 110. The transmitter 132 of the ONU 130c is configured to transmit upstream signals to the OLT with an upstream wavelength $\lambda_{us}$.

The diplexer 133 may be implemented similarly as the optical signal multiplexer 114 and will not be repeated here.

Fig. 2 shows a schematic flow diagram of the method according to the embodiment of Fig. 1.

In step S210, the first transmitter 111 in the OLT 110 transmits a predetermined data (e.g. all zeros) within a predetermined time interval in a downstream frame to the ONU 130c using the first wavelength $\lambda_{ds}$.

In step S220, the second transmitter 112 in the OLT 110 transmits a predetermined optical signal with a time delay of transmission $t_{delay,Tx}$ to the first ONU 130c using the second wavelength $\lambda_{st}$. The time delay of transmission $t_{delay,Tx}$ is a time between a predetermined bit, e.g., the first bit of the downstream frame and a predetermined bit, e.g., the first bit of the predetermined optical signal when they are transmitted by the OLT 110.

Advantageously, the predetermined optical signal is transmitted with a power sufficient to introduce errors (power crosstalk) into the received downstream signal during reception. The required transmit power of the second transmitter 112 during the emission of the predetermined optical signal shall be on the order of the average power of the downstream laser, and depends on the attenuation experienced by the predetermined optical signal with respect to the downstream signal as well as the receiver threshold.

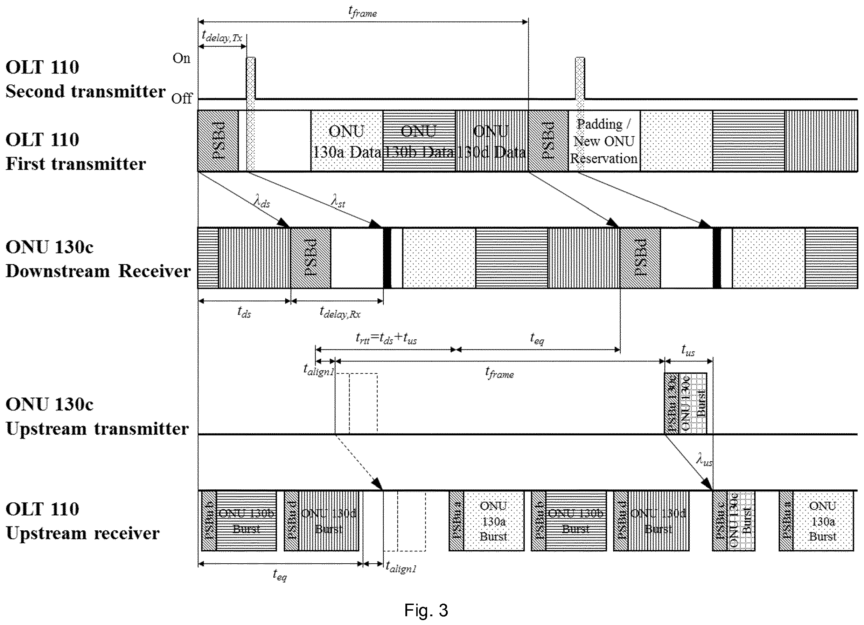

Fig. 3 shows a schematic timing diagram according to an embodiment of the present invention.

The first row in Fig. 3 schematically shows the predetermined optical signal, namely a strobe signal in the present embodiment, transmitted by the second transmitter 112 at the OLT 110 using the second wavelength $\lambda_{st}$.

The second row schematically shows a downstream signal transmitted by the first transmitter 111 at the OLT 110 using the first wavelength $\lambda_{ds}$. As shown in Fig. 3, a Physical Synchronization Block in Downstream (PSBd) represents the start of a downstream frame. Each downstream frame comprises a plurality of time intervals respectively assigned to the ONUs that are already in operation. In Fig. 3 the time interval marked with dots is used to carry downstream data for the ONU130a; the time interval marked with horizontal lines is used to carry downstream data for the ONU130b; the time interval marked with vertical lines is used to carry downstream data for the ONU130b. There is a predetermined time interval (white block in Fig. 3) in a downstream frame is reserved for downstream data for the ONU130c. Before ONU 130c is registered in the network, this predetermined time interval will be filled with predetermined data so as to keep constant throughput in the downstream direction. In one embodiment, the predetermined data may be all zeros or other data with certain pattern.

As shown in Fig. 3, the time delay of transmission $t_{delay,Tx}$ is a time between the first bit of the downstream frame and the first bit of the strobe signal when they are transmitted by the OLT 110. Advantageously, the time delay of transmission $t_{delay,Tx}$ and a duration of the predetermined data are determined according to a temporal position of the predetermined time interval in the downstream frame, the first wavelength $\lambda_{ds}$, the second wavelength $\lambda_{st}$ and a maximum possible fiber distance between the ONU 130c and the OLT 110, for example, 40 km. This ensures that the strobe signal falls in the predetermined time interval comprising the predetermined data, when it arrives at the ONU 130c.

The third row in Fig. 3 schematically shows the downstream signal when it is received by the ONU130c. The predetermined optical signal introduces errors in the downstream frame in the predetermined time interval when the downstream frame is received by the first ONU 130.

The fiber from the OLT 110 to the ONU 130c has a fixed distance. Optical signals at different wavelengths, namely the downstream data signal and the strobe signal experience different transit time from the OLT 110 to the ONU 130c due to wavelength dependency of the fiber refractive index. As shown in Fig. 3, the strobe signal experiences longer transit time from the OLT 110 to the ONU 130c.

Returning to Fig. 2, after the receiver 131 of the ONU 130c receives a downstream frame comprising errors in the predetermined time interval introduced by the predetermined optical signal from the OLT 110, the ONU 130c determines in step S230 a time delay of reception $t_{delay,Rx}$ between a predetermined bit, here the first bit of the downstream frame and a predetermined bit, here the first bit of the predetermined optical signal when they are received at the ONU 130c.

Specifically, the time delay of reception $t_{delay,Rx}$ is determined by locating and evaluating bit errors caused by the predetermined optical signal in the predetermined time interval of the received downstream frame. Specifically, the bit errors are located by comparing data within the predetermined time interval of the received downstream frame with the predetermined data. The temporal location of the predetermined bit of the predetermined optical signal is determined by evaluating error bits in the predetermined time interval in the received downstream frame.

An unmodulated burst from the strobe laser will introduce a sequence of errors by flipping optical "0"s to "1" at a delay of $t_{delay,Rx}$ with respect to the beginning of the downstream PON frame at the downstream receiver of the ONU 130c.

In one embodiment, the predetermined data and its temporal position in the downstream frame is preconfigured in the ONU 130. In another embodiment, the ONU 130c receives a predetermined data indication from the OLT 110, and the predetermined data indication indicates the predetermined data and its temporal position in the downstream frame.

In step S240, the ONU 130c determines a distance between the ONU 130c and the OLT 110 based on the first wavelength $\lambda_{ds}$, the second wavelength $\lambda_{st}$ and a time difference $\Delta t$ between the time delay of reception $t_{delay,Rx}$ and the time delay of transmission

$t_{delay,Tx}$, $\Delta t = t_{delay,Rx} - t_{delay,Tx}$.

In one embodiment, the time delay of transmission $t_{delay,Rx}$ is preconfigured in the ONU 130. In another embodiment, the ONU 130c receives a time delay indication indicating the time delay of transmission $t_{delay,Tx}$ from the OLT 110.

Specifically, the transit time of an optical signal in the optical fiber is wavelength-dependent and given by $t(\lambda) = Ln_g(\lambda)/c$, where L is the fiber length, $n_g$ is the group index and c is the speed of light in vacuum. In this embodiment, transit times for the downstream data signal $\lambda_{ds}$ and the strobe signal $\lambda_{st}$ are different. Hence, their relative delay after traversing fiber length L will be

$$\Delta t = t\left(\lambda_{st}\right) - t\left(\lambda_{ds}\right) = L\left[n_g\left(\lambda_{st}\right) - n_g\left(\lambda_{ds}\right)\right]\Big/c$$

and thus fiber length can be determined as $L = c\Delta t/[n_g(\lambda_{st}) - n_g(\lambda_{ds})]$ if relative delay is measured.

In one embodiment, the first wavelength $\lambda_{ds}$ and/or the second wavelength $\lambda_{st}$ are preconfigured in the ONU 130. In another embodiment, the ONU 130c receives a wavelength indication from the OLT 110, and the wavelength indication indicates the first wavelength $\lambda_{ds}$ and/or the second wavelength $\lambda_{st}$.

According to the state of the art, the distance between the OLT and the ONU is always determined at the OLT. However, according to the present invention, the fiber distance between the ONU 130c and the OLT 110 is directly determined at the ONU 130c. Although the accuracy and the resolution of the determined distance is limited, (because the time delay of the error burst can only be measured in bits), a ranging process can be carried out without reducing the capacity or increasing the latency of the system.

In step S250, the control unit 115 in the OLT 110 assigns to each of the operational ONUs 130a, 130b, 130d a time interval within an upstream frame to transmit an upstream burst signal to the OLT 110, while leaving at least one predetermined time slot in the upstream frame reserved for a burst signal from the ONU 130c. Advantageously, the at least one predetermined time slot is long enough to accommodate the burst signal from the ONU 130c.

The last row in Fig. 3 shows a schematic upstream signal received at the OLT 110. As shown in Fig. 3, the burst signals transmitted by the ONUs that are already in operation arrive at the OLT 110 respectively at the time slot assigned to them. Each of the burst begins with an upstream PSB. The bursts are separated with each other with sufficient guard time. As shown in Fig 3, a time slot is reserved in the upstream frame for the burst signal from the first ONU 130c.

In step S260, the first transmitter 111 in the OLT 110 transmits a first indication to the ONU 130c, wherein, the first indication indicates a starting time $t_{eq}$ located within the at least one predetermined time slot in the upstream frame.

In step S270, the ONU 130c determines a time of transmission according to the starting time $t_{eq}$ and a round-trip time $t_{rtt}$. Specifically, the round-trip time $t_{rtt}$ is estimated based on the distance determined in step S240 and the upstream wavelength $\lambda_{us}$ that the transmitter of the ONU 130c uses to transmit upstream signals.

The fourth row in Fig. 3 explains how to determine the time of transmission. In this embodiment, the ONU 130c uses the reception time of a downstream frame $t_{ds,Rx}$ as a reference time point. The reception time of a downstream frame $t_{ds,Rx}$ is the time when a predetermined bit, in this embodiment the first bit of the downstream frame is received by the receiver 131 of the ONU130c. Here, the downstream frame and the upstream frame have the same duration $t_{frame}$.

As shown in Fig. 3, the time of transmission of the ONU 130c $t_{us,Tx\,c}$ is expressed as $t_{us,Tx} = t_{ds,Rx} - t_{eq} - t_{rtt} + t_{align} + t_{frame}$. Wherein, $t_{align}$ is optional and used to temporally align the new burst signal to the middle of the quiet window.

In another embodiment, the downstream frame and the upstream frame may have different durations. The equation used to determine the time of transmission may be adapted according to the duration of the downstream frame and the upstream frame.

In step S280, the transmitter 132 of the ONU 130c transmits a burst signal using the upstream wavelength $\lambda_{us}$ to the OLT 110 based on the time of transmission. In one embodiment, the burst signal transmitted by the ONU 130c is a physical layer operation, administration and maintenance message, PLOAM, message.

The burst signal from the ONU 130c arrives at the OLT 110 after an upstream transmission time $t_{us}$ in the at least one predetermined time slot. A registration procedure is completed without configuring any quiet window.

This allows to initiate upstream transmission from the new ONU without interfering (no latency change or burst collision) with other ONUs that are already sending upstream traffic.

**Claims**

1. A method in an Optical Line Terminal, OLT (110), of assisting a first Optical Network Unit, ONU (130c), starting up a communication with the OLT (110), the OLT (110) being communicatively coupled to the first ONU (130c) that is not yet in operation and a first number of ONUs (130a, 130b, 130d) that are already in operation, wherein, the first number is a natural number;
   the method comprising:

   a) transmitting a predetermined data within a predetermined time interval in a downstream frame to the first ONU (130c),
   b) transmitting a predetermined optical signal with a time delay of transmission ($t_{delay,Tx}$) to the first ONU (130c), wherein, the predetermined optical signal and the downstream frame are transmitted at different optical frequencies, the time delay of transmission ($t_{delay,Tx}$) being a time between a predetermined bit of the downstream frame and a predetermined bit of the predetermined optical signal when they are transmitted by the OLT (110), and wherein, the predetermined optical signal introduces errors in the downstream frame in the predetermined time interval when the downstream frame is received by the first ONU (130);
   c) assigning to each of the first number of ONUs (130a, 130b, 130d) a time interval within an upstream frame to transmit an upstream burst signal to the OLT (110), while leaving at least one predetermined time slot in the upstream frame reserved for a burst signal from the first ONU (130c);
   d) transmitting a first indication to the first ONU (130c), the first indication indicating a starting time ($t_{eq}$) located within the at least one predetermined time slot in the upstream frame;
   e) receiving a burst signal from the first ONU (130c) in the at least one predetermined time slot.

2. A method according to claim 1, further comprising:

   - transmitting a wavelength indication to the first ONU (130c), the wavelength indication indicating a wavelength of a downstream signal and/or a wavelength of the predetermined optical signal.

3. A method according to claim 1, further comprising:

   - determining the time delay of transmission ($t_{delay,Tx}$) and a duration of the predetermined data according to a temporal position of the predetermined time interval in the downstream frame, a wavelength of a downstream signal, a wavelength of the predetermined optical signal and a maximum possible fiber distance between the first ONU (130c) and the OLT (110).

4. A method according to claim 1, further comprising:

   - transmitting a predetermined data indication to the first ONU (130c), the predetermined data indication indicating the predetermined data and its temporal position in the downstream frame.

5. A method according to claim 1, further comprising:

   - transmitting an indication indicating the time delay of transmission ($t_{delay,Tx}$) to the first ONU (130c).

6. A method according to claim 1, wherein, a wavelength of a downstream signal is different from that of an upstream burst.

7. A method in a first Optical Network Unit, ONU (130c), of starting up a communication with an Optical Line Terminal, OLT (110), the OLT (110) being communicatively coupled to the first ONU (130c), and a first number of ONUs (130a, 130b, 130d) that are already in operation, the first number being a natural number, each of the first number of ONUs (130a, 130b, 130d) being assigned to a time interval within an upstream frame to transmit an upstream burst signal to the OLT (110), at least one predetermined time slot in the upstream frame being reserved for a burst signal from the first ONU (130c);
the method comprising:

a) receiving a downstream frame from the OLT (110), the received downstream frame comprising errors in a predetermined time interval introduced by a predetermined optical signal, wherein, the predetermined optical signal and the downstream frame are transmitted at different optical frequencies,
b) determining a time delay of reception ($t_{delay,Rx}$) between a predetermined bit of the downstream frame and a predetermined bit of the predetermined optical signal when they are received at the ONU (130c);
c) determining a distance between the first ONU (130c) and the OLT (110) based on a wavelength of a downstream signal; a wavelength of the predetermined optical signal and a time difference ($\Delta t$) between the time delay of reception ($t_{delay,Rx}$) and a time delay of transmission ($t_{delay,Tx}$), wherein, the time delay of transmission ($t_{delay,Tx}$) is a time between a predetermined bit of the downstream frame and a predetermined bit of the predetermined optical signal when they are transmitted by the OLT (110);
d) receiving a first indication from the OLT (110), wherein, the first indication indicating a starting time ($t_{eq}$) located within the at least one predetermined time slot in an upstream frame;
e) determining a time of transmission according to the starting time ($t_{eq}$) and a round-trip time ($t_{rtt}$) estimated based on an upstream wavelength and the distance between the first ONU (130c) and the OLT (110);
f) transmitting a burst signal using the upstream wavelength to the OLT (110) based on the time of transmission.

8. A method according to claim 7, step b) further comprising:

- locating error bits caused by the predetermined optical signal by comparing data within the predetermined time interval of the received downstream frame with a predetermined data;
- determining a temporal location of the predetermined bit of the predetermined optical signal by evaluating the error bits in the predetermined time interval in the received downstream frame.

9. A method according to claim 7, further comprising:

- receiving a wavelength indication from the OLT (110), the wavelength indication indicating a wavelength of the downstream signal and/or a wavelength of the predetermined optical signal.

10. A method according to claim 7, further comprising:

- receiving a predetermined data indication from the OLT (110), the predetermined data indication indicating the predetermined data and its temporal position in the downstream frame.

11. A method according to claim 7, further comprising:

- receiving a time delay indication indicating the time delay of transmission ($t_{delay,Tx}$) from the OLT (110).

12. A method according to claim 7, wherein, the burst signal is a physical layer operation, administration and maintenance message, PLOAM, message.

13. A method according to claim 7, wherein, the at least one predetermined time slot is long enough to accommodate the burst signal from the first ONU (130c).

14. An Optical Line Terminal, OLT (110), communicatively coupled to the first ONU (130c) that is not yet in operation and a first number of ONUs (130a, 130b, 130d) that are already in operation, wherein, the first number is a natural number;
the OLT (110) comprising a first transmitter (111), a second transmitter (112) and a receiver (113) respectively connected to an optical signal multiplexer (114), and the OLT (110) further comprising a control unit (115) connected to the first transmitter (111), the second transmitter (112) and the receiver (113);
the first transmitter (111) being configured to transmit a predetermined data within a predetermined time interval in a downstream frame to the first ONU (130c);
the second transmitter being configured to transmit a predetermined optical signal with a time delay of transmission ($t_{delay,Tx}$) to the first ONU (130c), wherein, the predetermined optical signal and the downstream frame are transmitted at different optical frequencies, the time delay of transmission ($t_{delay,Tx}$) being a time between a predetermined bit of the downstream frame and a predetermined bit of the predetermined optical signal when they are transmitted by the OLT (110), and

wherein, the predetermined optical signal introduces errors in the downstream frame in the predetermined time interval when the downstream frame is received by the first ONU (130);

the control unit (115) being configured to: assign to each of the first number of ONUs (130a, 130b, 130d) a time interval within an upstream frame to transmit an upstream burst signal to the OLT (110), while leaving at least one predetermined time slot in the upstream frame reserved for a burst signal from the first ONU (130c);

the first transmitter (111) being further configured to transmit a first indication to the first ONU (130c), wherein, the first indication indicating a starting time ($t_{eq}$) located within the at least one predetermined time slot in the upstream frame;

the receiver (113) configured to receive a burst signal from the first ONU (130c) in the at least one predetermined time slot.

15. A first Optical Network Unit, ONU (130c), being communicatively coupled to an Optical Line Terminal, OLT (110), the OLT (110) being further communicatively coupled to a first number of ONUs (130a, 130b, 130d) that are already in operation, the first number being a natural number, each of the first number of ONUs (130a, 130b, 130d) being assigned to a time interval within an upstream frame to transmit an upstream signal to the OLT (110); at least one predetermined time slot in the upstream frame being reserved for a burst signal from the first ONU (130c); the first ONU (130c) comprising a receiver (131), a transmitter (132) connected to a diplexer (133), and the first ONU (130c) further comprising a determining unit (134) connected to the receiver (131) and the transmitter (132),

the receiver (131) being configured to:

- receive a downstream frame from the OLT (110), the received downstream frame comprising errors in a predetermined time interval introduced by a predetermined optical signal, wherein, the predetermined optical signal and the downstream frame are transmitted at different optical frequencies,

the determining unit (134) being configured to:

- determine a time delay of reception ($t_{delay,Rx}$) between a predetermined bit of the downstream frame and a predetermined bit of the predetermined optical signal when they are received at the ONU (130c);

- determine a distance between the first ONU (130c) and the OLT (110) based on a time difference ($\Delta t$) between the time delay of reception ($t_{delay,Rx}$) and a time delay of transmission ($t_{delay,Tx}$), a wavelength of a downstream signal and a wavelength of the predetermined optical signal, wherein, the time delay of transmission ($t_{delay,Tx}$) is a time between a predetermined bit of the downstream frame and a predetermined bit of the predetermined optical signal when they are transmitted by the OLT (110);

the receiver (131) being further configured to:

- receive a first indication from the OLT (110), wherein, the first indication indicating a starting time ($t_{eq}$) located within the at least one predetermined time slot in an upstream frame;

the determining unit (134) being further configured to:

- determine a time of transmission according to the starting time ($t_{eq}$) and a round-trip time ($t_{rtt}$) estimated based on an upstream wavelength ($\lambda_{us}$) and the distance between the first ONU (130c) and the OLT (110);

the transmitter (132) being configured to:

- transmit a burst signal using the upstream wavelength ($\lambda_{us}$) in an upstream frame to the OLT (110) based on the time of transmission.

**Patentansprüche**

1. Verfahren in einem Endgerät einer optischen Leitung, OLT, (110) zum Unterstützen einer ersten optischen Netzeinheit, ONU, (130c), eine Kommunikation mit dem OLT (110) zu starten, wobei das OLT (110) an die erste ONU (130c), die noch nicht in Betrieb ist, und an eine erste Anzahl von ONUs (130a, 130b, 130d), die bereits in Betrieb sind, kommunikationstechnisch gekoppelt ist, wobei die erste Anzahl eine natürliche Zahl ist; wobei das Verfahren Folgendes umfasst:

a) Senden vorbestimmter Daten innerhalb eines vorbestimmten Zeitintervalls in einem Abwärtsstreckenrahmen an die erste ONU (130c),

b) Senden eines vorbestimmten optischen Signals mit einer Zeitverzögerung der Übertragung ($t_{delay,Tx}$) an die erste ONU (130c), wobei das vorbestimmte optische Signal und der Abwärtsstreckenrahmen bei verschiedenen optischen Frequenzen gesendet werden, wobei die Zeitverzögerung der Übertragung ($t_{delay,Tx}$) eine Zeit zwischen einem vorbestimmten Bit des Abwärtsstreckenrahmens und einem vorbestimmten Bit des vorbestimmten optischen Signals ist, wenn sie durch das OLT (110) gesendet werden, und wobei das vorbestimmte optische Signal Fehler in den Abwärtsstreckenrahmen in dem vorbestimmten Zeitintervall einführt, wenn der Abwärtsstreckenrahmen durch die erste ONU (130) empfangen wird;

c) Zuweisen zu jeder der ersten Anzahl von ONUs (130a, 130b, 130d) eines Zeitintervalls innerhalb eines Aufwärtsstreckenrahmens, um ein Aufwärtsstrecken-Burst-Signal an das OLT (110) zu senden, während mindestens ein vorbestimmtes Zeitfenster in dem Aufwärtsstreckenrahmen für ein Burst-Signal von der ersten ONU (130c) reserviert bleibt;

d) Senden einer ersten Angabe an die erste ONU (130c), wobei die erste Angabe eine Startzeit ($t_{eq}$), die sich innerhalb des mindestens einen vorbestimmten Zeitfensters in dem Aufwärtsstreckenrahmen befindet, angibt;

e) Empfangen eines Burst-Signals von der ersten ONU (130c) in dem mindestens einen vorbestimmten Zeitfenster.

**2.** Verfahren nach Anspruch 1, das ferner Folgendes umfasst:

- Senden einer Wellenlängenangabe an die erste ONU (130c), wobei die Wellenlängenangabe eine Wellenlänge eines Abwärtsstreckensignals und/oder eine Wellenlänge des vorbestimmten optischen Signals angibt.

**3.** Verfahren nach Anspruch 1, das ferner Folgendes umfasst:

- Bestimmen der Zeitverzögerung einer Übertragung ($t_{delay,Tx}$) und einer Dauer der vorbestimmten Daten gemäß einer zeitlichen Position des vorbestimmten Zeitintervalls in dem Abwärtsstreckenrahmen, einer Wellenlänge eines Abwärtsstreckensignals, einer Wellenlänge des vorbestimmten optischen Signals und eines maximal möglichen Faserabstands zwischen der ersten ONU (130c) und dem OLT (110).

**4.** Verfahren nach Anspruch 1, das ferner Folgendes umfasst:

- Senden einer vorbestimmten Datenangabe an die erste ONU (130c), wobei die vorbestimmte Datenangabe die vorbestimmten Daten und ihre zeitliche Position in dem Abwärtsstreckenrahmen angibt.

**5.** Verfahren nach Anspruch 1, das ferner Folgendes umfasst:

- Senden einer Angabe, die die Zeitverzögerung einer Übertragung ($t_{delay,Tx}$) angibt, an die erste ONU (130c).

**6.** Verfahren nach Anspruch 1, wobei eine Wellenlänge eines Abwärtsstreckensignals von der eines Aufwärtsstrecken-Bursts verschieden ist.

**7.** Verfahren in einer ersten optischen Netzeinheit, ONU, (130c) des Startens einer Kommunikation mit einem Endgerät einer optischen Leitung, OLT, (110), wobei das OLT (110) an die erste ONU (130c) und eine erste Anzahl von ONUs (130a, 130b, 130d), die bereits in Betrieb sind, kommunikationstechnisch gekoppelt ist, wobei die erste Anzahl eine natürliche Zahl ist, wobei jede der ersten Anzahl von ONUs (130a, 130b, 130d) einem Zeitintervall innerhalb eines Aufwärtsstreckenrahmens zugewiesen ist, um ein Aufwärtsstrecken-Burst-Signal an das OLT (110) zu senden, wobei mindestens ein vorbestimmtes Zeitfenster in dem Aufwärtsstreckenrahmen für ein Burst-Signal von der ersten ONU (130c) reserviert ist;

wobei das Verfahren Folgendes umfasst:

a) Empfangen eines Abwärtsstreckenrahmens von dem OLT (110), wobei der empfangene Abwärtsstreckenrahmen Fehler in einem vorbestimmten Zeitintervall umfasst, die durch ein vorbestimmtes optisches Signal eingeführt werden, wobei das vorbestimmte optische Signal und der Abwärtsstreckenrahmen bei verschiedenen optischen Frequenzen gesendet werden,

b) Bestimmen einer Zeitverzögerung des Empfangs ($t_{delay,Rx}$) zwischen einem vorbestimmten Bit des Abwärtsstreckenrahmens und einem vorbestimmten Bit des vorbestimmten optischen Signals, wenn sie an der ONU (130c) empfangen werden;

c) Bestimmen eines Abstands zwischen der ersten ONU (130c) und dem OLT (110) anhand einer Wellenlänge eines Abwärtsstreckensignals; einer Wellenlänge des vorbestimmten optischen Signals und eines Zeitunterschieds ($\Delta t$) zwischen der Zeitverzögerung des Empfangs ($t_{delay,Rx}$) und einer Zeitverzögerung der Übertragung ($t_{delay,Tx}$), wobei die Zeitverzögerung der Übertragung ($t_{delay,Tx}$) eine Zeit zwischen einem vorbestimmten Bit des Abwärtsstreckenrahmens und einem vorbestimmten Bit des vorbestimmten optischen Signals ist, wenn sie durch das OLT (110) gesendet werden;

d) Empfangen einer ersten Angabe von dem OLT (110), wobei die erste Angabe eine Startzeit ($t_{eq}$) angibt, die sich innerhalb des mindestens einen vorbestimmten Zeitfensters in einem Aufwärtsstreckenrahmen befindet;

e) Bestimmen einer Übertragungszeit gemäß der Startzeit ($t_{eq}$) und einer Umlaufzeit ($t_{rtt}$), die anhand einer Aufwärtsstreckenwellenlänge und dem Abstand zwischen der ersten ONU (130c) und dem OLT (110) geschätzt wird;

f) Senden eines Burst-Signals unter Verwendung der Aufwärtsstreckenwellenlänge an das OLT (110) anhand der Übertragungszeit.

8. Verfahren nach Anspruch 7, wobei Schritt b) ferner Folgendes umfasst:

- Lokalisieren von Fehlerbits, die durch das vorbestimmte optische Signal verursacht werden, durch Vergleichen von Daten innerhalb des vorbestimmten Zeitintervalls des empfangenen Abwärtsstreckenrahmens mit vorbestimmten Daten;

- Bestimmen eines zeitlichen Orts des vorbestimmten Bits des vorbestimmten optischen Signals durch Beurteilen der Fehlerbits in dem vorbestimmten Zeitintervall in dem empfangenen Abwärtsstreckenrahmen.

9. Verfahren nach Anspruch 7, das ferner Folgendes umfasst:

- Empfangen einer Wellenlängenangabe von dem OLT (110), wobei die Wellenlängenangabe eine Wellenlänge des Abwärtsstreckensignals und/oder eine Wellenlänge des vorbestimmten optischen Signals angibt.

10. Verfahren nach Anspruch 7, das ferner Folgendes umfasst:

- Empfangen einer vorbestimmten Datenangabe von dem OLT (110), wobei die vorbestimmte Datenangabe die vorbestimmten Daten und ihre zeitliche Position in dem Abwärtsstreckenrahmen angibt.

11. Verfahren nach Anspruch 7, das ferner Folgendes umfasst:

- Empfangen einer Zeitverzögerungsangabe, die die Zeitverzögerung der Übertragung ($t_{delay,Tx}$) von dem OLT (110) angibt.

12. Verfahren nach Anspruch 7, wobei das Burst-Signal eine Betriebs-, Verwaltungs- und Wartungsnachricht einer physikalischen Schicht, PLOAM-Nachricht, ist.

13. Verfahren nach Anspruch 7, wobei das mindestens eine vorbestimmte Zeitfenster lang genug ist, um das Burst-Signal von der ersten ONU (130c) aufzunehmen.

14. Endgerät einer optischen Leitung, OLT, (110), das an die erste ONU (130c), die noch nicht in Betrieb ist, und eine erste Anzahl von ONUs (130a, 130b, 130d), die bereits in Betrieb sind, kommunikationstechnisch gekoppelt ist, wobei die erste Anzahl eine natürliche Zahl ist;

wobei das OLT (110) einen ersten Sender (111), einen zweiten Sender (112) und einen Empfänger (113) umfasst, die jeweils an einen Multiplexer optischer Signale (114) gekoppelt sind und das OLT (110) ferner eine Steuereinheit (115) umfasst, die mit dem ersten Sender (111), dem zweiten Sender (112) und dem Empfänger (113) verbunden ist;

wobei der erste Sender (111) konfiguriert ist, vorbestimmte Daten innerhalb eines vorbestimmten Zeitintervalls in einem Abwärtsstreckenrahmen an die erste ONU (130c) zu senden;

der zweite Sender konfiguriert ist, ein vorbestimmtes optisches Signal mit einer Zeitverzögerung der Übertragung ($t_{delay,Tx}$) an die erste ONU (130c) zu senden, wobei das vorbestimmte optische Signal und der Abwärtsstreckenrahmen bei verschiedenen optischen Frequenzen gesendet werden, wobei die Zeitverzögerung der Übertragung ($t_{delay,Tx}$) eine Zeit zwischen einem vorbestimmten Bit des Abwärtsstreckenrahmens und einem vorbestimmten Bit des vorbestimmten optischen Signals ist, wenn sie durch das OLT (110) gesendet werden, und wobei das vorbestimmte optische Signal Fehler in dem Abwärtsstreckenrahmen in dem vorbestimmten Zeitintervall einführt, wenn der Abwärtsstreckenrahmen durch die erste ONU (130) empfangen wird;

die Steuereinheit (115) konfiguriert ist zum: Zuweisen zu jeder der ersten Anzahl von ONUs (130a, 130b, 130d) eines Zeitintervalls innerhalb eines Aufwärtsstreckenrahmens, um ein Aufwärtsstrecken-Burst-Signal an das OLT (110) zu senden, während mindestens ein vorbestimmtes Zeitfenster in dem Aufwärtsstreckenrahmen für ein Burst-Signal von der ersten ONU (130c) reserviert bleibt;

wobei der erste Sender (111) ferner konfiguriert ist, eine erste Angabe an die erste ONU (130c) zu senden, wobei die erste Angabe eine Startzeit ($t_{eq}$), die sich innerhalb des mindestens einen vorbestimmten Zeitfensters in dem Aufwärtsstreckenrahmen befindet, angibt;

der Empfänger (113) konfiguriert ist, ein Burst-Signal von der ersten ONU (130c) in dem mindestens einen vorbestimmten Zeitfenster zu empfangen.

15. Erste optische Netzeinheit, ONU, (130c), die an ein Endgerät einer optischen Leitung, OLT, (110) kommunikationstechnisch gekoppelt ist, wobei das OLT (110) ferner an eine erste Anzahl von ONUs (130a, 130b, 130d), die bereits in Betrieb sind, kommunikationstechnisch gekoppelt ist, wobei die erste Anzahl eine natürliche Zahl ist, wobei jede der ersten Anzahl von ONUs (130a, 130b, 130d) einem Zeitintervall innerhalb eines Aufwärtsstreckenrahmens zugewiesen ist, um ein Aufwärtsstreckensignal an das OLT (110) zu senden; wobei mindestens ein Zeitfenster in dem Aufwärtsstreckenrahmen für ein Burst-Signal von der ersten ONU (130c) reserviert ist, wobei die erste ONU (130c) einen Empfänger (131), einen Sender (132), der mit einem Diplexer (133) verbunden ist, umfasst, und die erste ONU (130c) ferner eine Bestimmungseinheit (134) umfasst, die mit dem Empfänger (131) und dem Sender (132) verbunden ist,
wobei der Empfänger (131) konfiguriert ist zum:

- Empfangen eines Abwärtsstreckenrahmens von dem OLT (110), wobei der empfangene Abwärtsstreckenrahmen Fehler in einem vorbestimmten Zeitintervall umfasst, die durch ein vorbestimmtes optisches Signal eingeführt werden, wobei das vorbestimmte optische Signal und der Abwärtsstreckenrahmen bei verschiedenen optischen Frequenzen gesendet werden,

wobei die Bestimmungseinheit (134) konfiguriert ist zum:

- Bestimmen einer Zeitverzögerung des Empfangs ($t_{delay,Rx}$) zwischen einem vorbestimmten Bit des Abwärtsstreckenrahmens und einem vorbestimmten Bit des vorbestimmten optischen Signals, wenn sie an der ONU (130c) empfangen werden;
- Bestimmen eines Abstands zwischen der ersten ONU (130c) und dem OLT (110) anhand eines Zeitunterschieds ($\Delta t$) zwischen der Zeitverzögerung des Empfangs ($t_{delay,Rx}$) und einer Zeitverzögerung der Übertragung ($t_{delay,Tx}$), einer Wellenlänge eines Abwärtsstreckensignals und einer Wellenlänge des vorbestimmten optischen Signals, wobei die Zeitverzögerung der Übertragung ($t_{delay,Tx}$) eine Zeit zwischen einem vorbestimmten Bit des Abwärtsstreckenrahmens und einem vorbestimmten Bit des vorbestimmten optischen Signals ist, wenn sie durch das OLT (110) gesendet werden;

wobei der Empfänger (131) ferner konfiguriert ist zum:

- Empfangen einer ersten Angabe von dem OLT (110), wobei die erste Angabe eine Startzeit ($t_{eq}$) angibt, die sich innerhalb des mindestens einen vorbestimmten Zeitfensters in einem Aufwärtsstreckenrahmen befindet;

wobei die Bestimmungseinheit (134) ferner konfiguriert ist zum:

- Bestimmen einer Übertragungszeit gemäß der Startzeit ($t_{eq}$) und einer Umlaufzeit ($t_{rtt}$), die anhand einer Aufwärtsstreckenwellenlänge ($\lambda_{us}$) und dem Abstand zwischen der ersten ONU (130c) und dem OLT (110) geschätzt wird;

wobei der Sender (132) konfiguriert ist zum:

- Senden eines Burst-Signals unter Verwendung der Aufwärtsstreckenwellenlänge ($\lambda_{us}$) in einem Aufwärtsstreckenrahmen an das OLT (110) anhand der Übertragungs zeit.

## Revendications

1. Procédé dans un Terminal de Ligne Optique, OLT (110), consistant à assister une première Unité de Réseau Optique, ONU (130c), dans l'établissement d'une communication avec l'OLT (110), l'OLT (110) étant couplé par voie de communication à la première ONU (130c) qui n'est pas encore en fonctionnement et à un premier nombre d'ONU (130a, 130b, 130d) qui sont déjà en fonctionnement, dans lequel le premier nombre est un nombre naturel ;
le procédé comprenant :

a) la transmission de données prédéterminées à l'intérieur d'un intervalle de temps prédéterminé dans une trame aval à la première ONU (130c),
b) la transmission d'un signal optique prédéterminé avec un temps de retard de transmission ($t_{delay, Tx}$) à la première ONU (130c), dans lequel le signal optique prédéterminé et la trame aval sont transmis à des fréquences optiques différentes, le temps de retard de transmission ($t_{delay, Tx}$) étant un temps compris entre un bit prédéterminé de la trame aval et un bit prédéterminé du signal optique prédéterminé lorsqu'ils sont transmis par l'OLT (110), et dans lequel le signal optique prédéterminé introduit des erreurs dans la trame aval dans l'intervalle de temps prédéterminé lorsque la trame aval est reçue par la première ONU (130) ;
c) l'affectation à chacune des premières ONU (130a, 130b, 130d) d'un intervalle de temps à l'intérieur d'une trame amont pour transmettre un signal en salve amont à l'OLT (110), tout en laissant au moins un créneau temporel prédéterminé dans la trame amont, réservé à un signal en salve provenant de la première ONU (130c) ;
d) la transmission d'une première indication à la première ONU (130c), la première indication indiquant un temps de début ($t_{eq}$) se situant à l'intérieur dudit au moins un créneau temporel prédéterminé dans la trame amont ;
e) la réception d'un signal en salve en provenance de la première ONU (130c) dans ledit au moins un créneau temporel prédéterminé.

2. Procédé selon la revendication 1, comprenant en outre :

- la transmission d'une indication de longueur d'onde à la première ONU (130c), l'indication de longueur d'onde indiquant une longueur d'onde d'un signal aval et/ou une longueur d'onde du signal optique prédéterminé.

3. Procédé selon la revendication 1, comprenant en outre :

- la détermination du temps de retard de transmission ($t_{delay, Tx}$) et d'une durée des données prédéterminées en fonction d'une position temporelle de l'intervalle de temps prédéterminé dans la trame aval, d'une longueur d'onde d'un signal aval, d'une longueur d'onde du signal optique prédéterminé et d'une distance de fibre maximale possible entre la première ONU (130c) et l'OLT (110).

4. Procédé selon la revendication 1, comprenant en outre :

- la transmission d'une indication de données prédéterminée à la première ONU (130c), l'indication de données prédéterminée indiquant les données prédéterminées et leur position temporelle dans la trame aval.

5. Procédé selon la revendication 1, comprenant en outre :

- la transmission d'une indication indiquant le temps de retard de transmission ($t_{delay, Tx}$) à la première ONU (130c) .

6. Procédé selon la revendication 1, dans lequel une longueur d'onde d'un signal aval est différente de celle d'une salve amont.

7. Procédé, dans une première Unité de Réseau Optique, ONU (130c), consistant à établir une communication avec un Terminal de Ligne Optique, OLT (110), l'OLT (110) étant couplé par voie de communication à la première ONU (130c), et un premier nombre d'ONU (130a, 130b, 130d) qui sont déjà en fonctionnement, le premier nombre étant un nombre naturel, chacune du premier nombre d'ONU (130a, 130b, 130d) étant affectée à un intervalle de temps à l'intérieur d'une trame amont pour transmettre un signal en salve amont à l'OLT (110), au moins un créneau temporel prédéterminé dans la trame amont étant réservé à un signal en salve provenant de la première ONU (130c) ;
le procédé comprenant :

a) la réception d'une trame aval en provenance de l'OLT (110), la trame aval reçue comprenant des erreurs dans un intervalle de temps prédéterminé introduites par un signal optique prédéterminé, dans lequel le signal optique prédéterminé et la trame aval sont transmis à des fréquences optiques différentes,
b) la détermination d'un temps de retard de réception ($t_{delay, Rx}$) entre un bit prédéterminé de la trame aval et un bit prédéterminé du signal optique prédéterminé lorsqu'ils sont reçus au niveau de l'ONU (130c) ;
c) la détermination d'une distance entre la première ONU (130c) et l'OLT (110) sur la base d'une longueur d'onde d'un signal aval ; d'une longueur d'onde du signal optique prédéterminé et d'une différence de temps ($\Delta t$) entre le temps de retard de réception ($t_{delay, Rx}$) et un temps de retard de transmission ($t_{delay, Tx}$), dans lequel le temps de retard de transmission ($t_{delay, Rx}$) est un temps compris entre un bit prédéterminé de la trame aval et un bit prédéterminé du signal optique prédéterminé lorsqu'ils sont transmis par l'OLT (110) ;
d) la réception d'une première indication en provenance de l'OLT (110), dans lequel la première indication indique un temps de début ($t_{eq}$) se situant à l'intérieur dudit au moins un créneau temporel prédéterminé dans une trame amont ;
e) la détermination d'un temps de transmission en fonction du temps de début ($t_{eq}$) et d'un temps aller-retour ($t_{rtt}$) estimé sur la base d'une longueur d'onde amont et de la distance entre la première ONU (130c) et l'OLT (110) ;
f) la transmission d'un signal en salve utilisant la longueur d'onde amont à l'OLT (110) sur la base du temps de transmission.

8. Procédé selon la revendication 7, l'étape b) comprenant en outre :

- la localisation de bits d'erreur provoqués par le signal optique prédéterminé en comparant des données à l'intérieur de l'intervalle de temps prédéterminé de la trame aval reçue à des données prédéterminées ;
- la détermination d'une localisation temporelle du bit prédéterminé du signal optique prédéterminé en évaluant les bits d'erreur dans l'intervalle de temps prédéterminé dans la trame aval reçue.

9. Procédé selon la revendication 7, comprenant en outre :

> - la réception d'une indication de longueur d'onde en provenance de l'OLT (110), l'indication de longueur d'onde indiquant une longueur d'onde du signal aval et/ou une longueur d'onde du signal optique prédéterminé.

10. Procédé selon la revendication 7, comprenant en outre :

> - la réception d'une indication de données prédéterminées en provenance de l'OLT (110), l'indication de données prédéterminées indiquant les données prédéterminées et leur position temporelle dans la trame aval.

11. Procédé selon la revendication 7, comprenant en outre :

> - la réception d'une indication de temps de retard indiquant le temps de retard de transmission ($t_{delay, Tx}$) en provenance de l'OLT (110).

12. Procédé selon la revendication 7, dans lequel le signal en salve est un message d'opération, d'administration et de maintenance de couche physique, ou message PLOAM.

13. Procédé selon la revendication 7, dans lequel ledit au moins un créneau temporel prédéterminé est suffisamment long pour prendre en charge le signal en salve provenant de la première ONU (130c).

14. Terminal de Ligne Optique, OLT (110), couplé par voie de communication à la première ONU (130c) qui n'est pas encore en fonctionnement et à un premier nombre d'ONU (130a, 130b, 130d) qui sont déjà en fonctionnement, dans lequel le premier nombre est un nombre naturel ;
l'OLT (110) comprenant un premier émetteur (111), un second émetteur (112) et un récepteur (113) respectivement connectés à un multiplexeur de signaux optiques (114), et l'OLT (110) comprenant en outre une unité de commande (115) connectée au premier émetteur (111), au second émetteur (112) et au récepteur (113) ;
le premier émetteur (111) étant configuré pour transmettre des données prédéterminées à l'intérieur d'un intervalle de temps prédéterminé dans une trame aval à la première ONU (130c) ;
le second émetteur étant configuré pour transmettre un signal optique prédéterminé avec un temps de retard de transmission ($t_{delay, Tx}$) à la première ONU (130c), dans lequel le signal optique prédéterminé et la trame aval sont transmis à des fréquences optiques différentes, le temps de retard de transmission

($t_{delay, Rx}$) étant un temps compris entre un bit prédéterminé de la trame aval et un bit prédéterminé du signal optique prédéterminé lorsqu'ils sont transmis par l'OLT (110), et dans lequel le signal optique prédéterminé introduit des erreurs dans la trame aval dans l'intervalle de temps prédéterminé lorsque la trame aval est reçue par la première ONU (130) ;
l'unité de commande (115) étant configurée pour : affecter à chacune du premier nombre d'ONU (130a, 130b, 130d) un intervalle de temps à l'intérieur d'une trame amont pour transmettre un signal en salve amont à l'OLT (110), tout en laissant au moins un créneau temporel prédéterminé dans la trame amont, réservé à un signal en salve provenant de la première ONU (130c) ;
le premier émetteur (111) étant en outre configuré pour transmettre une première indication à la première ONU (130c), dans lequel la première indication indique un temps de début ($t_{eq}$) se situant à l'intérieur dudit au moins un créneau temporel prédéterminé dans la trame amont ;
le récepteur (113) étant configuré pour recevoir un signal en salve en provenance de la première ONU (130c) dans ledit au moins un créneau temporel prédéterminé.

15. Première Unité de Réseau Optique, ONU (130c), couplée par voie de communication à un Terminal de Ligne Optique, OLT (110), l'OLT (110) étant en outre couplé par voie de communication à un premier nombre d'ONU (130a, 130b, 130d) qui sont déjà en fonctionnement, le premier nombre étant un nombre naturel, chacune des premières ONU (130a, 130b, 130d) étant affectée à un intervalle de temps à l'intérieur d'une trame amont pour transmettre un signal amont à l'OLT (110) ; au moins un créneau temporel prédéterminé dans la trame amont étant réservé à un signal en salve provenant de la première ONU (130c) ; la première ONU (130c) comprenant un récepteur (131), un émetteur (132) connecté à un duplexeur (133), et la première ONU (130c) comprenant en outre une unité de détermination (134) connectée au récepteur (131) et à l'émetteur (132),
le récepteur (131) étant configuré pour :

> - recevoir une trame aval en provenance de l'OLT (110), la trame aval reçue comprenant des erreurs dans un intervalle de temps prédéterminé introduites par un signal optique prédéterminé, dans lequel le signal optique prédéterminé et la trame aval sont transmis à des fréquences optiques différentes,

l'unité de détermination (134) étant configurée pour :

> - déterminer un temps de retard de réception ($t_{delay, Px}$) entre un bit prédéterminé de la trame aval et un bit prédéterminé du signal optique prédéterminé lorsqu'ils sont reçus au niveau de l'ONU (130c) ;

- déterminer une distance entre la première ONU (130c) et l'OLT (110) sur la base d'une différence de temps ($\Delta$t) entre le temps de retard de réception ($t_{delay, Rx}$) et un temps de retard de transmission ($t_{delay, Tx}$), d'une longueur d'onde d'un signal aval et d'une longueur d'onde du signal optique prédéterminé, dans lequel le temps de retard de transmission ($t_{delay, Tx}$) est un temps compris entre un bit prédéterminé de la trame aval et un bit prédéterminé du signal optique prédéterminé lorsqu'ils sont transmis par l'OLT (110) ;

le récepteur (131) étant en outre configuré pour :

- recevoir une première indication en provenance de l'OLT (110), dans lequel la première indication indique un temps de début ($t_{eq}$) se situant à l'intérieur dudit au moins un créneau temporel prédéterminé dans une trame amont ;

l'unité de détermination (134) étant en outre configurée pour :

- déterminer un temps de transmission en fonction du temps de début ($t_{eq}$) et d'un temps aller-retour ($t_{rtt}$) estimé sur la base d'une longueur d'onde amont ($\lambda_{us}$) et de la distance entre la première ONU (130c) et l'OLT (110) ;

l'émetteur (132) étant configuré pour :

- transmettre un signal en salve utilisant la longueur d'onde amont ($\lambda_{us}$) dans une trame amont à l'OLT (110) sur la base du temps de transmission.

100

110

111

114

115    112

113

130a

130b

130c

133    131

134

132

130d

120

Fig. 1

| OLT 110 | ONU 130a | ONU 130c |

S210

S220

Determining $t_{delay,Rx}$  S230

Assigning a time slot for new ONU    S250

Determining distance    S240

S260

Determining time of transmission    S270

S280

Fig. 2

16

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017000992 A1